# EUROPEAN PATENT APPLICATION

(11) **EP 4 657 911 A1**
(43) Date of publication of application: **03.12.2025**
(21) Application number: 24756048.5
(22) Date of filing: 04.02.2024
(51) Int. Cl.: H04W 24/00

(54) **COMMUNICATION METHOD AND APPARATUS**

(30) Priority: 16.02.2023 CN 202310166517; 12.05.2023 CN 202310541138
(71) Applicant: Huawei Technologies Co., Ltd., Shenzhen, Guangdong 518129 (CN)
(72) Inventor: LU, Rui, Shenzhen, Guangdong 518129 (CN); HU, Xingxing, Shenzhen, Guangdong 518129 (CN); XU, Bin, Shenzhen, Guangdong 518129 (CN); ZHENG, Lili, Shenzhen, Guangdong 518129 (CN)
(74) Representative: Epping - Hermann - Fischer
(86) International application number: PCT/CN2024/075692
(87) International publication number: WO 2024/169674

(57) **Abstract**

This application provides a communication method. The method includes: A terminal device obtains GNSS location information in a preset time period, where a moment at which the terminal device starts to obtain the GNSS location information is a first moment, and a moment at which the terminal device completes obtaining the GNSS location information is a second moment. The terminal device triggers a TAR after obtaining the GNSS location information; or the terminal device is prohibited from triggering a TAR between the first moment and the second moment; or the terminal device triggers a first TAR between the first moment and the second moment, and after obtaining the GNSS location information, the terminal device determines, based on a first variation, whether to cancel the first TAR; or the terminal device is prohibited from generating a TA report MAC CE between the first moment and the second moment, where the TA report MAC CE is used to report a TA. According to solutions in embodiments of this application, accuracy of a TA reported by the terminal device can be improved.

## Description

This application claims priority to Chinese Patent Application No. 202310166517.7, filed with the China National Intellectual Property Administration on February 16, 2023 and entitled "COMMUNICATION METHOD AND APPARATUS", and to Chinese Patent Application No. 202310541138.1, filed with the China National Intellectual Property Administration on May 12, 2023 and entitled "COMMUNICATION METHOD AND APPARATUS", which are incorporated herein by reference in their entireties.

### TECHNICAL FIELD

This application relates to the communication field, and specifically, to a communication method and apparatus.

### BACKGROUND

Currently, there is a type of terminal device, and a capability of this type of terminal device is weak. Specifically, a global navigation satellite system (global navigation satellite system, GNSS) obtaining module and a communication module of this type of terminal device cannot work at the same time. Therefore, a dedicated time is required for obtaining GNSS location information.

For example, this type of terminal device may be an Internet of Things (Internet of Things, IoT) device. The IoT device is generally used in industries such as transportation and logistics (such as ocean, highway, railway, and aviation), solar energy, oil and natural gas collection, agriculture and animal husbandry, environment monitoring, and mining.

This type of terminal device may access a non-terrestrial network (non-terrestrial network, NTN), and a communication service is provided for this type of terminal device through the NTN network. This type of terminal device needs the GNSS location information as assistance for accessing a network. For example, the GNSS information is required to calculate a timing advance (timing advance, TA) for time synchronization and frequency synchronization.

However, when obtaining the GNSS location information, this type of terminal device may trigger a timing advance report (time advance report, TAR), and a TA value corresponding to the TAR is obtained based on GNSS location information that is not updated. Therefore, the TA value may be inaccurate. In other words, when triggering the TAR during GNSS measurement, this type of terminal device may report an inaccurate TA value to a network device. The inaccurate TA value may cause this type of terminal device to be out of synchronization with the network device.

Therefore, how to improve accuracy of a TA value reported by this type of terminal device is a problem to be resolved.

### SUMMARY

This application provides a communication method and apparatus, to improve accuracy of a TA value reported by a terminal device.

According to a first aspect, a communication method is provided. The method includes:
A terminal device obtains GNSS location information in a preset time period, where a moment at which the terminal device starts to obtain the GNSS location information is a first moment, and a moment at which the terminal device completes obtaining the GNSS location information is a second moment.

It should be noted that the preset time period is a time period in which the terminal device obtains the GNSS location information; or the preset time period may be a GAP, where the GAP is a time period dedicated for the terminal device to obtain the GNSS location information, and the terminal device obtains the GNSS location information during the GAP. In this case, the first moment may also be a start moment of the GAP, and the second moment may also be an end moment of the GAP.

The terminal device triggers a TAR after obtaining the GNSS location information; or the terminal device is prohibited from triggering a TAR between the first moment and the second moment; or the terminal device triggers a first TAR between the first moment and the second moment, and after obtaining the GNSS location information, the terminal device determines, based on a first variation, whether to cancel the first TAR, where the first variation is a variation of a first TA relative to a second TA, the first TA is obtained based on the GNSS location information, and the second TA is a TA most recently reported by the terminal device before the preset time period; or the terminal device is prohibited from generating a TA report media access control control element (media access control control element, MAC CE) between the first moment and the second moment, where the TA report MAC CE is used to report a TA.

According to this embodiment of this application, the terminal device is prohibited from triggering a TAR during GNSS measurement; or the terminal device is prohibited from triggering a TAR during the GAP. In this manner, the terminal device can be prevented from reporting an inaccurate TA to a network device, thereby resolving the foregoing problem from the source.

With reference to the first aspect, in some implementations of the first aspect, an end moment of the preset time period is a third moment, and that the terminal device triggers the TAR after obtaining the GNSS location information includes:
The terminal device triggers the TAR between the second moment and the third moment; or the terminal device triggers the TAR after the third moment.

With reference to the first aspect, in some implementations of the first aspect, that the terminal device triggers the TAR after obtaining the GNSS location information includes:
After obtaining the GNSS location information, the terminal device does not need to determine, based on a first variation, whether to trigger the TAR. In other words, the TAR is triggered after the GNSS location information is obtained. The first variation is a variation of a first TA relative to a second TA, the first TA is obtained based on the GNSS location information, and the second TA is a TA most recently reported by the terminal device before the preset time period. Equivalently, the GNSS location information may alternatively be obtained after the preset time period ends, or may be obtained after the GAP ends.

With reference to the first aspect, in some implementations of the first aspect, that the terminal device triggers the TAR after obtaining the GNSS location information includes:
After obtaining the GNSS location information, the terminal device determines a first variation, where the first variation is a variation of a first TA relative to a second TA, the first TA is obtained based on the GNSS location information, and the second TA is a TA most recently reported by the terminal device before the preset time period; and the terminal device triggers the TAR when the first variation is greater than or equal to a preset threshold. Equivalently, the GNSS location information may alternatively be obtained after the preset time period ends, or may be obtained after the GAP ends.

With reference to the first aspect, in some implementations of the first aspect, that the terminal device determines, based on the first variation, whether to cancel the first TAR includes:
The terminal device cancels the first TAR when the first variation is less than a preset threshold.

With reference to the first aspect, in some implementations of the first aspect, that the terminal device is prohibited from generating the TA report MAC CE between the first moment and the second moment includes:
Between the first moment and the second moment, the terminal device is prohibited from using an uplink shared channel UL-SCH resource and triggering a scheduling request.

With reference to the first aspect, in some implementations of the first aspect, the terminal device is an Internet of Things terminal.

According to a second aspect, a communication method is provided. The method includes:
A terminal device obtains first global navigation satellite system GNSS location information in a preset time period; and the terminal device determines whether to trigger conditional handover CHO in the preset time period.

With reference to the second aspect, in some implementations of the second aspect, that the terminal device determines whether to trigger the CHO in the preset time period includes:
The terminal device determines that triggering of the CHO is prohibited in the preset time period.

According to this embodiment of this application, because reliability (or accuracy) of the GNSS location information of the terminal device is low in the preset time period, if the terminal device evaluates, based on the GNSS information with low reliability, whether to trigger the CHO, premature or delayed handover may be caused. Therefore, the terminal device may be prohibited from triggering the CHO in the preset time period.

With reference to the second aspect, in some implementations of the second aspect, a moment at which the terminal device starts to obtain the first GNSS location information is a first moment, a moment at which the terminal device completes obtaining the first GNSS location information is a second moment, and that the terminal device determines whether to trigger the CHO in the preset time period includes:
The terminal device determines that triggering of the CHO based on the first GNSS location information is allowed after the second moment.

According to this embodiment of this application, after GNSS measurement is completed, the first GNSS location information (that is, updated GNSS location information) is obtained. In this case, the preset time period may not end. Before the preset time period ends, the terminal device may evaluate, by using the first GNSS location information, whether to trigger the CHO, so that the terminal device switches to a new network device in a timely manner.

With reference to the second aspect, in some implementations of the second aspect, that the terminal device determines whether to trigger the CHO in the preset time period includes:
The terminal device determines that triggering of the CHO is allowed in the preset time period.

With reference to the second aspect, in some implementations of the second aspect, the terminal device can switch from a source network device to a target network device based on the CHO, and that the terminal device determines that triggering of the CHO is allowed in the preset time period includes:
The terminal device determines remaining service duration, where the remaining service duration is remaining duration in which the source network device can provide a service for the terminal device; and if the remaining service duration is less than a preset threshold, the terminal device determines that triggering of the CHO based on second GNSS location information and/or first RSRP is allowed in the preset time period, where both the second GNSS location information and the first RSRP are obtained by the terminal device before the preset time period; or if the remaining service duration is greater than a preset threshold, the terminal device determines that triggering of the CHO based on the first GNSS location information is allowed in the preset time period.

With reference to the second aspect, in some implementations of the second aspect, that the terminal device determines that triggering of the CHO is allowed in the preset time period includes:
The terminal device determines that triggering of the CHO based on second GNSS location information and/or first RSRP is allowed in the preset time period, where both the second GNSS location information and the first RSRP are obtained by the terminal device before the preset time period.

According to a third aspect, a communication method is provided. The method includes:
A terminal device starts a first timer, and the terminal device needs to perform at least one task of the following during running of the first timer: radio link monitoring, cell selection, serving cell measurement, neighboring cell measurement, system information reading, or radio link reestablishment; and when the terminal device starts GNSS measurement before the first timer expires, the terminal device skips running the first timer during the GNSS measurement, where the terminal device cannot perform the task during the GNSS measurement.

With reference to the third aspect, in some implementations of the third aspect, that when the terminal device starts the GNSS measurement before the first timer expires, the terminal device skips running the first timer during the GNSS measurement includes:
The terminal device suspends the first timer before the GNSS measurement starts, and resumes the first timer after the GNSS measurement is completed.

With reference to the third aspect, in some implementations of the third aspect, that when the terminal device starts the GNSS measurement before the first timer expires, the terminal device skips running the first timer during the GNSS measurement includes:
The terminal device stops the first timer before the GNSS measurement starts.

With reference to the third aspect, in some implementations of the third aspect, the method further includes:
After the GNSS measurement is completed, the terminal device starts a second timer, where the first timer and the second timer are of a same type.

With reference to the third aspect, in some implementations of the third aspect, preset timeout duration of the first timer is the same as preset timeout duration of the second timer.

With reference to the third aspect, in some implementations of the third aspect, the preset timeout duration of the second timer is a first value, and the first value is equal to the preset timeout duration of the first timer minus running duration of the first timer.

With reference to the third aspect, in some implementations of the third aspect, the method further includes:
The terminal device starts a second timer when the GNSS measurement starts, where the first timer and the second timer are of a same type, preset timeout duration of the second timer is a third value, and the third value is equal to preset timeout duration of the first timer plus duration required for the GNSS measurement.

According to a fourth aspect, a communication method is provided. The method includes:
A terminal device reads system information, where the system information includes satellite assistance information, and the satellite assistance information includes at least one of the following: ephemeris information, a delay parameter from a satellite to a reference point, validity duration of the satellite assistance information, and a reference time of the satellite assistance information; and the terminal device sends first information to a network device, where the first information indicates a remaining validity time of the satellite assistance information obtained by the terminal device.

The terminal device receives second information from the network device, where the second information indicates a first time period, the first time period is used by the terminal device to perform GNSS measurement, and the terminal device does not read the system information in the first time period.

With reference to the fourth aspect, in some implementations of the fourth aspect, an end moment of the first time period is before a start moment of reading the system information.

With reference to the fourth aspect, in some implementations of the fourth aspect, a start moment of the first time period is before an end moment of reading the system information.

According to a fifth aspect, a communication method is provided. The method includes:
A network device obtains first information, where the first information indicates a remaining validity time of satellite assistance information. The network device determines a first time period based on the first information, where the first time period is used by a terminal device to perform GNSS measurement, the first time period does not overlap a second time period, the second time period is used by the terminal device to re-read system information, and the system information includes the satellite assistance information. The network device sends second information to the terminal device, where the second information indicates the first time period.

With reference to the fifth aspect, in some implementations of the fifth aspect, an end moment of the first time period is before a start moment of the second time period.

With reference to the fifth aspect, in some implementations of the fifth aspect, a start moment of the first time period is after an end moment of the second time period.

With reference to the fifth aspect, in some implementations of the fifth aspect, the first information further indicates a reference time point of the remaining validity time of the satellite assistance information.

According to a sixth aspect, a communication method is provided. The method includes:
A terminal device performs GNSS measurement in a first time period, where an end moment of the first time period is before a preset moment, and the preset moment is an end moment at which a first cell can provide a service for the terminal device; and the terminal device switches from the first cell to a second cell after the end moment of the first time period.

With reference to the sixth aspect, in some implementations of the sixth aspect, a time interval between the end moment of the first time period and the preset moment is greater than or equal to a preset threshold.

According to a seventh aspect, a communication method is provided. The method includes:
A network device determines a first time period based on a preset moment, where an end moment of the first time period is before the preset moment, the first time period is used by a terminal device to perform GNSS measurement, and the preset moment is an end moment at which a first cell can provide a service for the terminal device; and the network device sends information about the first time period to the terminal device.

With reference to the seventh aspect, in some implementations of the seventh aspect, a time interval between the end moment of the first time period and the preset moment is greater than or equal to a preset threshold.

With reference to the seventh aspect, in some implementations of the seventh aspect, that the network device determines the first time period based on the preset moment includes:
When the preset moment is before expiration of GNSS information, and an interval between the preset moment and an expiration moment of the GNSS information is less than a threshold, the network device determines the first time period based on the preset moment.

With reference to the seventh aspect, in some implementations of the seventh aspect, that the network device determines the first time period based on the preset moment includes:

When the preset moment is after expiration of GNSS information, and an interval between the preset moment and an expiration moment of the GNSS information is less than a threshold, the network device determines the first time period based on the preset moment.

With reference to the seventh aspect, in some implementations of the seventh aspect, the threshold is a time required for performing GNSS measurement.

According to an eighth aspect, a communication method is provided. The method includes:
A terminal device obtains information about a first time period and information about a second time period; the terminal device performs GNSS measurement in the first time period; and the terminal device performs a process of switching from a first cell to a second cell in the second time period, where an end moment of the second time period is after an end moment of the first time period.

With reference to the eighth aspect, in some implementations of the eighth aspect, that the terminal device obtains the information about the first time period and the information about the second time period includes:
The terminal device receives the information about the first time period and the information about the second time period that are from a network device.

With reference to the eighth aspect, in some implementations of the eighth aspect, that the terminal device obtains the information about the first time period and the information about the second time period includes:
The terminal device receives the information about the first time period and information about a third time period that are from a network device, where an end moment of the third time period is before the end moment of the first time period, and the third time period is used by the terminal device to perform the process of switching from the first cell to the second cell; and the terminal device receives the information about the second time period from the network device, where the second time period is used to update the third time period.

With reference to the eighth aspect, in some implementations of the eighth aspect, that the terminal device obtains the information about the first time period and the information about the second time period includes:
The terminal device receives information about a third time period from a network device, where an end moment of the third time period is before the end moment of the first time period, and the third time period is used by the terminal device to perform the process of switching from the first cell to the second cell; the terminal device sends the information about the first time period to the network device; and the terminal device receives the information about the second time period from the network device, where the second time period is used to update the third time period.

According to a ninth aspect, a communication method is provided. The method includes:
A network device obtains information about a first time period and information about a third time period, where the first time period is used by a terminal device to perform GNSS measurement, and the third time period is used by the terminal device to perform a process of switching from a first cell to a second cell; the network device determines that an end moment of the third time period is before an end moment of the first time period; and the network device sends information about a second time period to the terminal device, where the second time period is used to update the third time period, and an end moment of the second time period is after the end moment of the first time period.

With reference to the ninth aspect, in some implementations of the ninth aspect, that the network device obtains the information about the first time period includes:
The network device receives the information about the first time period from the terminal device.

According to a tenth aspect, a communication method is provided. The method includes:
A terminal device receives information about an execution condition of conditional handover from a network device, where the execution condition of the conditional handover includes that GNSS information is valid; and the terminal device performs conditional handover when the execution condition of the conditional handover is met.

With reference to the tenth aspect, in some implementations of the tenth aspect, that the GNSS information is valid includes: a remaining validity time of the GNSS information is greater than or equal to a preset threshold.

According to an eleventh aspect, a communication apparatus is provided. In a possible implementation, the communication apparatus may include modules or units for performing the methods/operations/steps/actions described in the first aspect to the tenth aspect in a one-to-one correspondence manner. The modules or units may be implemented by hardware circuits, software, or a combination of hardware circuits and software.

According to a twelfth aspect, a communication apparatus is provided, including a communication interface and a processor. The communication interface is configured to output and/or input a signal, and the processor is configured to execute a computer program or instructions stored in a memory, to cause the communication apparatus to perform the method of the first aspect to the tenth aspect.

Optionally, the memory may be included in the communication apparatus. In a manner, the memory and the processor may be disposed separately. In another manner, the memory may be located in the processor and integrated with the processor.

Optionally, the memory may alternatively be outside the communication apparatus and coupled to the processor.

According to a thirteenth aspect, a computer-readable storage medium is provided, including a computer program. When the computer program is run on a computer, the computer is caused to perform the method according to any possible implementation of the first aspect to the tenth aspect.

According to a fourteenth aspect, a chip or a chip system is provided. The chip or the chip system includes a processing circuit and an input/output interface, where the processing circuit is configured to perform the method according to any possible implementation of the first aspect to the tenth aspect.

According to a fifteenth aspect, a computer program product is provided. The computer program product includes a computer program (or may be referred to as code or instructions). When the computer program is run, a computer is caused to perform the method according to any possible implementation of the first aspect to the tenth aspect.

According to a sixteenth aspect, a communication system is provided, including a network device and a terminal device. The terminal device is configured to perform the method according to any possible implementation of the first aspect.

Alternatively, the terminal device is configured to perform the method according to any possible implementation of the second aspect.

Alternatively, the terminal device is configured to perform the method according to any possible implementation of the third aspect.

Alternatively, the terminal device is configured to perform the method according to any possible implementation of the fourth aspect, and the network device is configured to perform the method according to any possible implementation of the fifth aspect.

Alternatively, the terminal device is configured to perform the method according to any possible implementation of the sixth aspect, and the network device is configured to perform the method according to any possible implementation of the seventh aspect.

Alternatively, the terminal device is configured to perform the method according to any possible implementation of the eighth aspect, and the network device is configured to perform the method according to any possible implementation of the ninth aspect.

Alternatively, the terminal device is configured to perform the method according to any possible implementation of the tenth aspect.

### BRIEF DESCRIPTION OF DRAWINGS

FIG. 1 shows a communication system to which this application is applicable;
FIG. 2 is a diagram of a fixed cell;
FIG. 3 is a diagram of a moving cell;
FIG. 4 is a diagram of a TA;
FIG. 5 shows a method according to this application;
FIG. 6 shows a method according to this application;
FIG. 7 shows a method according to this application;
FIG. 8 shows a method according to this application;
FIG. 9 shows a method according to this application;
FIG. 10 shows a method according to this application;
FIG. 11 shows a method according to this application;
FIG. 12 is a block diagram of a communication apparatus according to this application; and
FIG. 13 is a block diagram of a communication apparatus according to this application.

### DESCRIPTION OF EMBODIMENTS

Technical solutions in embodiments of this application may be applied to various 3rd Generation Partnership Project (3rd Generation Partnership Project, 3GPP) communications systems, for example, a long term evolution (long term evolution, LTE) system, an LTE frequency division duplex (frequency division duplex, FDD) system, an LTE time division duplex (time division duplex, TDD) system, a 5th generation (5th generation, 5G) communication system, and a future evolved communication system, for example, a 6th generation (6th generation, 6G) communication system or the like.

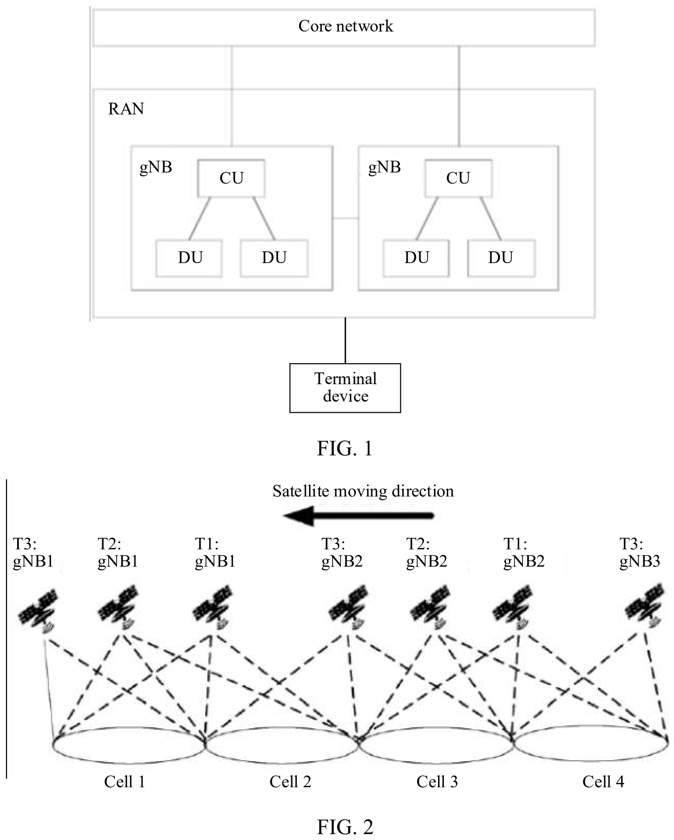

FIG. 1 shows a communication system to which this application is applicable. The communication system includes an access network device, a core network device, and a terminal device.

For ease of understanding, the terms involved in this application are first described.

### (1) Network device

The network device in embodiments of this application may be an access network device, or may be a core network device.

The access network device is a radio access network (radio access network, RAN) node (or device) that connects a terminal device to a wireless network, and may also be referred to as a base station. The base station may be a next generation NodeB (generation NodeB, gNB), an evolved NodeB (evolutional NodeB, eNB or eNodeB) in an LTE system, a base station in a 5G system, a next-generation base station in a 6G system and a communication system after 6G, or the like.

A specific technology and a specific device form used by the base station are not limited in embodiments of this application. For example, the base station may be a macro base station, a micro base station (also referred to as a small cell), a relay station, an access point, a transmission reception point (transmitting and receiving point, TRP), a transmission point (transmitting point, TP), a mobile switching center, a network device (which may be deployed on a high-altitude platform or a satellite) in a non-terrestrial network (non-terrestrial network, NTN) communication system, a sidelink (sidelink) scenario (for example, device-to-device (device-to-device, D2D) and vehicle-to-everything (vehicle-to-everything, V2X)), and the like. The network device may be a module or unit that performs some functions of the base station, for example, may be a central unit (central unit, CU) or a distributed unit (distributed unit, DU). The CU and the DU separately perform some protocol stack functions of the base station. In addition, functions of the CU may be implemented by a plurality of entities. For example, control plane (control plane, CP) and user plane (user plane, UP) functions of the CU are separated to form a CU control plane (CU-CP) and a CU user plane (CU-UP). For example, the CU-CP and the CU-UP may be implemented by different functional entities, and are connected through an E1 interface. The CU-CP and the CU-UP may be coupled to the DU.

The core network device is a device, in a core network (core network, CN), that provides service support for a terminal device. Currently, examples of some core network devices include: an access and mobility management function (access and mobility management function, AMF) entity, a session management function (session management function, SMF) entity, a user plane function (user plane function, UPF) entity, and the like.

### (2) Terminal device

The terminal device in this application is a terminal device with a weak capability. Specifically, a GNSS obtaining module and a communication module of this type of terminal device cannot work at the same time. Therefore, a dedicated time is required for obtaining GNSS location information.

This type of terminal device may be various devices that provide voice and/or data connectivity for a user, and may also be referred to as a terminal, user equipment (user equipment, UE), a mobile station, a mobile terminal, or the like. The terminal device may be widely used in various scenarios, such as customer-premises equipment (customer-premises equipment, CPE), a smart point of sale (point of sale, POS) machine, a sidelink scenario (for example, D2D or V2X), an Internet of Things (Internet of Things, IoT), virtual reality, augmented reality, industrial control, autonomous driving, telemedicine, a smart grid, smart furniture, a smart office, smart wearable, smart transportation, a smart city, or the like. The terminal may be a mobile phone, a tablet computer, a computer with a wireless transceiver function, a wearable device, an unmanned aerial vehicle, an in-vehicle device, an aerospace device, or the like. In embodiments of this application, a chip used in the foregoing device may also be referred to as a terminal.

### (3) NTN

With advantages of wide coverage, long communication distance, high reliability, high flexibility, and high throughput, the NTN communication is not affected by a geographical environment, a climate condition, and a natural disaster, and has been widely used in fields, such as aeronautical communication, maritime communication, military communication, or the like. Non-terrestrial network devices include air network devices such as satellites, drones, high-altitude platform (high altitude platform station, HAPS) communication systems, or the like. Introducing the NTN into 5G can improve performance of a communication system. In an NTN system, a satellite communication architecture is classified into two types: a transparent forwarding (transparent) architecture, in which the satellite only functions as a relay (relay) or an amplifier, and can perform radio frequency filtering and amplification to regenerate signals; and a regenerative (regenerative) architecture, in which the satellite can function as a gNB, a distributed unit (distributed unit, DU), or a relay. The relay herein is different from the relay in the first type, and in this case, the satellite is not merely a relay, but further has a signal processing function.

### (4) Fixed cell (fixed cell) and moving cell (moving cell)

Usually, a higher orbit of a satellite indicates a larger coverage area but a longer communication delay of the satellite. Satellites may be classified into the following types based on an orbit height: (1) Low earth orbit (low earth orbit, LEO): The orbit height ranges from 160 km to 2000 km. (2) Medium earth orbit (middle earth orbit, MEO): The orbit height ranges from 2000 km to 35786 km. (3) Geostationary earth orbit (geostationary earth orbit, GEO): The orbital height is 35786 km. The GEO satellite is also referred to as a geostationary satellite. The satellite moves at the same speed as the earth's rotation system. Therefore, the satellite is stationary relative to the ground. Correspondingly, a cell of the GEO satellite is also stationary.

The MEO satellite and the LEO satellite are collectively referred to as a non-geostationary satellite (non-geostationary earth orbit, NGSO). The LEO satellite is used as an example. The LEO satellite moves fast relative to the ground. Therefore, a coverage region in which the LEO satellite provides a service also moves accordingly. There are two modes of cells cast by the LEO satellite to the ground: a fixed cell (fixed cell) and a moving cell (moving cell).

The fixed cell is a cell projected to the ground and is stationary relative to the ground. The NGSO satellite above the ground covers the same location on the ground by adjusting a beam direction. When the NGSO satellite cannot cover the ground, another NGSO satellite takes over the coverage. As shown in FIG. 2, fixed cells are mapped as follows: Locations of the cells are fixed on the ground, and these cells are formed by adjusting beams of moving satellites. For example, at a moment T1, a cell 1 and a cell 2 are covered by a beam of a gNB1, and a cell 3 and a cell 4 are covered by a beam of a gNB2. At a moment T2, although both the gNB1 and the gNB2 move leftward, beams of the gNB1 and the gNB2 can still be adjusted to ensure coverage of the cell 1, the cell 2, the cell 3, and the cell 4. At a moment T3, compared with the moment T1, as the gNB1 and the gNB2 have moved far enough, the gNB1 cannot provide coverage for the cell 2 by adjusting the beam, and the gNB2 cannot provide coverage for the cell 4 by adjusting the beam. In this case, the gNB2 can provide coverage for the cell 2, and a gNB3 can provide coverage for the cell 4.

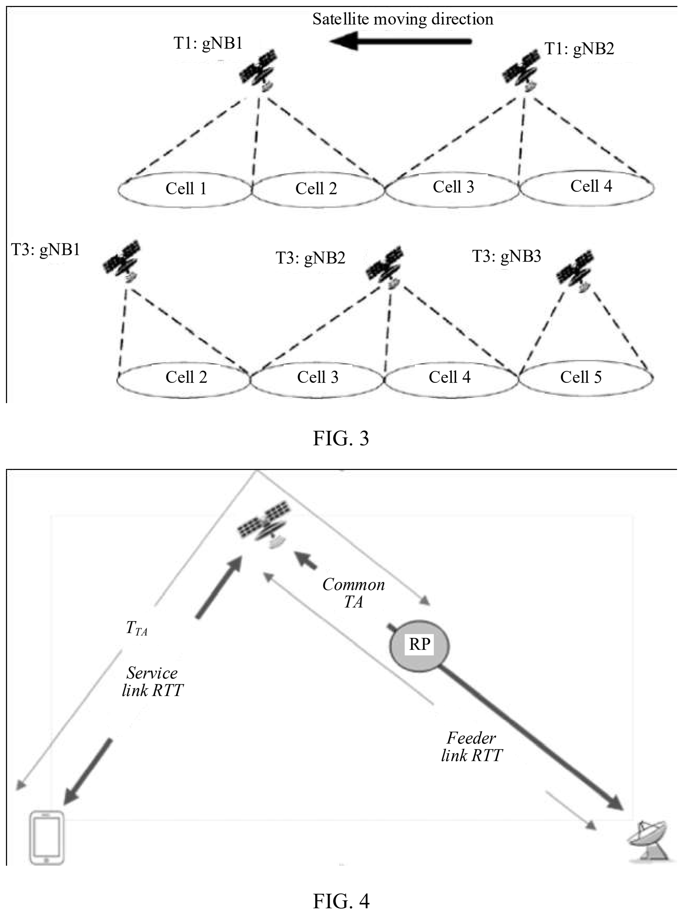

The moving cell is a cell projected to the ground and moves along with the NGSO satellite. During movement, the beam direction of the NGSO satellite remains unchanged. As shown in FIG. 3, earth moving cells are mapped as follows: A moving satellite does not dynamically adjust its beam direction, instead a beam generated by the moving satellite moves on the ground along with movement of the satellite. For example, at the moment T1, the region shown in FIG. 2 is covered by the cell 1, the cell 2, the cell 3, and the cell 4 of the gNB1 and the gNB2; and at the moment T3, the region is covered by the cell 2, the cell 3, the cell 4, and a cell 5 of the gNB1, the gNB2, and the gNB3.

### (5) Internet of Things (Internet of Things, IoT) NTN

The IoT NTN refers to providing a communication service for an IoT device through an NTN network.

The IoT device is classified into a narrowband (narrowband, NB) IoT device and an enhanced machine type communication (enhanced machine type communication, eMTC) device. The NB-IoT device is used in intermittent, lightweight, and low-data-usage communication scenarios, such as most sensors in the Internet of Things. The eMTC device is mainly used in machine-to-machine communication scenarios. Compared with the NB-IoT device, the eMTC device requires a higher data rate. Similar to new radio (new radio, NR), the IoT device also needs GNSS location information as assistance when accessing a network. For example, the GNSS location information is required for time synchronization and frequency synchronization. A system architecture and a working mode of the IoT NTN are the same as those of an NR NTN. Different from the NR NTN, the IoT NTN has a weak terminal device capability, and the GNSS obtaining module and the communication module cannot work at the same time. Therefore, the IoT NTN device needs a dedicated time for obtaining the GNSS location information.

### (6) TA

An important characteristic of uplink transmission is that uplink transmission of different terminal devices from a same cell does not interfere with each other. To ensure orthogonality of uplink transmission and avoid intra-cell (intra-cell) interference, a network device requires that moments at which signals that are of different terminal devices and that are from a same subframe but different frequency domain resources arrive at the network device are basically aligned. As long as the network device receives, within a range of a cyclic prefix (cyclic prefix), uplink data sent by the terminal device, the network device can correctly decode the uplink data. Therefore, uplink synchronization requires that times at which signals that are of different terminal devices and that are from a same subframe arrive at the network device all fall within the cyclic prefix.

To ensure time synchronization on a receive side (a network device side), an uplink timing advance (uplink timing advance) mechanism is introduced. By properly controlling an offset of each terminal device, the network device may control times at which uplink signals from different terminal devices arrive at the network device. For a terminal device far away from the network device, due to a large transmission delay, the terminal device needs to send uplink data in advance compared with a terminal device close to the network device.

In an NTN scenario, the TA is calculated by the terminal device based on GNSS location information of the terminal device and location information of a satellite (the location information of the satellite may be obtained by using ephemeris information). As shown in FIG. 4, the TA in the NTN includes two parts. One part is a transmission delay (represented by a service link RTT) from a terminal device to a satellite, and the other part is a transmission delay (represented by a Common TA) from the satellite to a reference point (reference point, RP). The Common TA is calculated and delivered by a network side to the terminal device, and the service link RTT is calculated by the terminal device based on the GNSS location information and the location information of the satellite. The terminal device calculates a total TA (that is, T_{TA} in FIG. 4) and then reports the total TA to the network.

### (7) Obtaining of GNSS location information

An IoT device is used as an example. Because the IoT device does not support that the GNSS obtaining module and the communication module work at the same time, the IoT device cannot perform communication when obtaining the GNSS.

Manners of obtaining the GNSS location information include but are not limited to the following three manners:
1) A preset time period is configured for the IoT device, for the IoT device to obtain the GNSS location information. For example, the preset time period may be a GAP, and the GAP is a dedicated preset time period. During the GAP, the IoT device obtains only the GNSS location information, and the network device does not schedule the IoT device.

For example, the network device may configure the preset time period for the IoT device.

For another example, the IoT device may configure the preset time period for the IoT device.

2) After the IoT device is out of synchronization in uplink, a radio link failure (radio link failure, RLF) is triggered, and the IoT device obtains the GNSS location information during RLF recovery. In this case, the preset time period is a time period required for the RLF recovery, or the preset time period is a time period required for obtaining the GNSS location information.

3) A timer is configured for the IoT device. A length of the timer is configured by the network device, the timer is started by the IoT device, and an occasion for starting the timer may be determined by the IoT device, or may be specified by the network device. After the timer expires, the IoT device triggers GNSS measurement to obtain the GNSS location information. Different from 2), the RLF is not triggered herein.

### (8) Conditional handover (conditional handover, CHO)

To avoid a case in which signaling cannot be normally exchanged between a terminal device and a source base station caused by link quality deterioration of the source base station, a CHO mechanism is proposed in the conventional technology. Specifically, when quality of a link between the source base station and the terminal device is good, the source base station sends CHO configuration information to the terminal device, where the configuration information includes a CHO trigger condition and information about a candidate cell. After receiving the configuration information, the terminal device determines, based on the configuration information, whether the candidate cell meets a handover trigger condition, and uses a candidate cell that meets the handover trigger condition as a target cell. Then, the terminal device initiates random access to the target cell. After the random access succeeds, the terminal device sends a radio resource control (radio resource control, RRC) reconfiguration complete message to a base station (that is, a target base station) to which the target cell belongs, to notify the target base station that the conditional handover is completed.

The CHO may be classified into time based (time based) CHO, location based (location based) CHO, and measurement based (measurement based) CHO.

In the time based CHO, the base station configures a handover time window for the terminal device, and the terminal device evaluates a handover execution condition and completes handover within the time window. In the location based CHO, the base station configures a distance threshold for the terminal device, and handover is completed when the distance threshold is met. In the measurement based CHO, the terminal device evaluates, based on reference signal received power (reference signal receiving power, RSRP), whether to perform handover.

Both the location based CHO and the time based CHO need to depend on a location of the terminal device. Therefore, GNSS location information of the terminal device is critical to execution of the CHO. In addition, in both the location based CHO and the time based CHO, handover evaluation also needs to be performed based on the reference signal received power (reference signal receiving power, RSRP). The terminal device cannot perform measurement during the GAP or the GNSS measurement. In this period, the terminal device cannot determine, based on the latest RSRP, whether to execute the CHO, affecting successful execution of the CHO. As a satellite moves, a TA changes during the GNSS measurement performed by the terminal device. Therefore, a TAR may be triggered. Because the location of the terminal device may have changed in this case, the GNSS location information may have been inaccurate, and in the TAR, an inaccurate TA value may be reported to the network device. The inaccurate TA value may cause the terminal device to be out of synchronization with the network device.

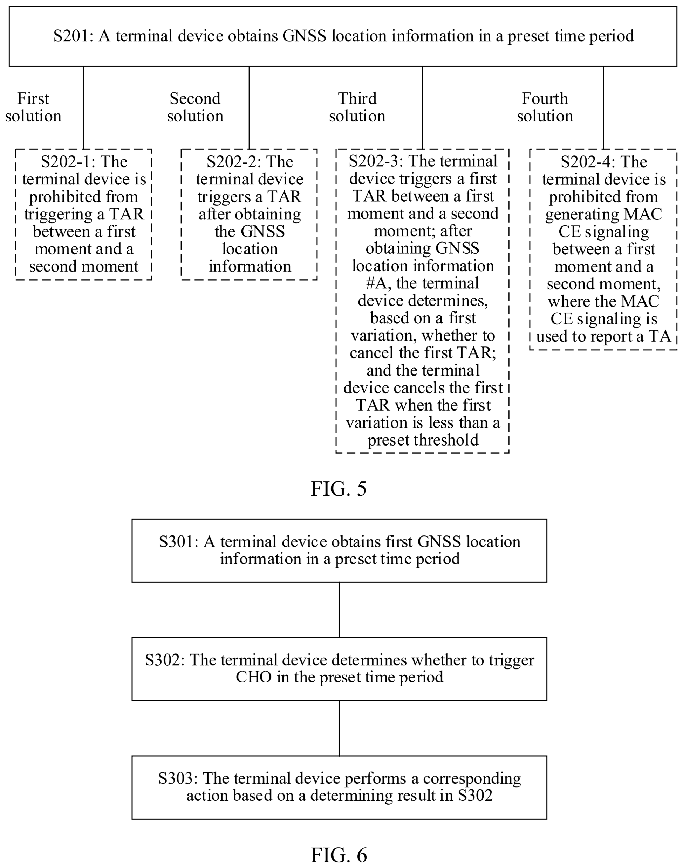

For this problem, as shown in FIG. 5, an embodiment of this application provides a communication method 200. The communication method 200 includes the following steps.

S201: A terminal device obtains GNSS location information in a preset time period.

For ease of description, the GNSS location information is denoted as GNSS location information #A.

A moment at which the terminal device starts to obtain the GNSS location information #A is a first moment, and a moment at which the terminal device completes obtaining the GNSS location information #A is a second moment.

It may be understood that the preset time period is a time period in which the terminal device performs GNSS measurement and obtains the GNSS location information #A. The preset time period may also be the foregoing GAP. When the preset time period is the GAP, the first moment may also be a start moment of the GAP, and the second moment may also be an end moment of the GAP. The terminal device may perform GNSS measurement based on any one of the following:
(1) The network device may deliver a first message to the terminal device, where the first message includes the preset time period. The terminal device is configured to perform GNSS measurement in the preset time period based on the first message delivered by the network device, to obtain the GNSS location information #A. The preset time period may be determined based on a time required for obtaining the GNSS location information, and a length of the preset time period is not shorter than the time required for obtaining the GNSS location information. Optionally, the time required for obtaining the GNSS location information may be determined by the terminal device and reported to a network. The preset time period may be configured for the terminal device by using a MAC CE, or may be configured for the terminal device by using RRC signaling, for example, an RRC reconfiguration (RRC Reconfiguration) message.
   The first message may further include a start time of the preset time period, or a start time at which the terminal device performs GNSS measurement. Optionally, the terminal device may start the GNSS measurement based on a start time configured by a network side, and stop the GNSS measurement before the preset time period ends. Optionally, the terminal device may alternatively determine a start time of the measurement. Optionally, the terminal device reports the start time to the network side when determining the start time of the GNSS measurement. For example, the network side and the terminal device align preset time periods by using the start time, and does not schedule the terminal device in the preset time period.
(2) The terminal device may configure the preset time period, and the terminal device performs GNSS measurement in the preset time period based on a configuration of the terminal device, to obtain the GNSS location information #A. The preset time period may be determined based on a time required for obtaining the GNSS location information, and a length of the preset time period is not shorter than the time required for obtaining the GNSS location information. The terminal device may determine a start time of the GNSS measurement. Optionally, the terminal device may report the start time and/or the length of the preset time period to a network side. For example, the network side and the terminal device align preset time periods by using the start time and the length of the preset time period, and does not schedule the terminal device in the preset time period.
(3) The terminal device triggers an RLF, and performs GNSS measurement during RLF recovery to obtain the GNSS location information #A. Optionally, duration of a timer for waiting for the RLF recovery is not shorter than a time required for obtaining the GNSS location information.
(4) The network device may configure preset duration of a timer for the terminal device, and the terminal device starts the timer. An occasion for starting the timer may be determined by the terminal device, or may be specified by the network device. If the timer expires and no GNSS information obtaining indication delivered by the network device is received, the terminal device performs GNSS measurement in the preset time period, to obtain the GNSS location information #A.

For the foregoing problem, in a first solution, the method further includes S202-1.

S202-1: The terminal device is prohibited from triggering a TAR between the first moment and the second moment.

In other words, the terminal device is prohibited from triggering the TAR during the GNSS measurement; or the terminal device is prohibited from triggering the TAR during the GAP. For example, it may be specified that the terminal device does not trigger the TAR during the GNSS measurement. Alternatively, it may be specified that the terminal device does not trigger the TAR during the GAP. For the first solution, optionally, after the second moment, the terminal device determines, based on a first variation, whether to trigger the TAR. The first variation is a variation of a first TA relative to a second TA. The first TA is a TA most recently reported by the terminal device to the network device before the preset time period (in other words, the first TA is a last TA reported by the terminal device to the network device before the preset time period, or the first TA is a TA currently maintained/used by the network side, or the first TA is a TA reported by the terminal device to the network device last time), and the second TA is determined based on the GNSS location information #A. Details about the first TA and the second TA are not described in the following.

Optionally, when the first variation is greater than or equal to a preset threshold, the terminal device may trigger the TAR.

When the first variation is less than a preset threshold, the terminal device does not trigger the TAR.

According to this embodiment of this application, triggering of the TAR is prohibited during the GNSS measurement, so that the terminal device can be prevented from reporting an inaccurate TA to the network device, thereby resolving the foregoing problem from the source.

For the foregoing problem, in a second solution, the method further includes S202-2.

S202-2: The terminal device triggers a TAR after obtaining the GNSS location information #A.

Equivalently, the terminal device may trigger the TAR after the GAP ends, or the terminal device triggers the TAR after the preset time period ends.

The following describes a manner of S202-2 by using an example in which "the terminal device triggers the TAR after obtaining the GNSS location information #A".

### Manner 1:

After the terminal device obtains the GNSS location information #A, the terminal device triggers the TAR regardless of whether a first variation is greater than or equal to a preset threshold or is less than a preset threshold. The first variation is a variation of a first TA relative to a second TA. For descriptions of the first TA and the second TA, refer to the foregoing descriptions.

In other words, in Manner 1, after obtaining the GNSS location information #A, the terminal device unconditionally triggers the TAR without determining the variation of the first TA relative to the second TA.

### Manner 2:

After obtaining the GNSS location information, the terminal device determines a first variation, where the first variation is a variation of first TA relative to a second TA. For descriptions of the first TA and the second TA, refer to the foregoing descriptions.

Further, the terminal device triggers the TAR only when the first variation is greater than or equal to a preset threshold.

In other words, in Manner 2, the terminal device needs to determine the variation of the first TA relative to the second TA.

It should be noted that, equivalently, "after obtaining the GNSS location information #A" may also be expressed as "after the GAP ends", or may be expressed as "after the preset time period ends".

According to this method, the TA reported to the network side can be updated in a timely manner. The following example describes a process of updating and reporting a TA in this method in various scenarios.

For ease of description, a TAR triggered by the terminal device between the first moment and the second moment is denoted as a first TAR, and a TAR triggered by the terminal device after the second moment is denoted as a second TAR. For example, the second TAR may be triggered between the second moment and an end moment of the preset time period, or may be triggered after an end moment of the preset time period. This is not limited.

The first TAR is used to report a third TA, and the second TAR is used to report the second TA. The second TA is obtained based on the GNSS location information #A.

In a first case, both the first TAR and the second TAR are triggered, the terminal device performs packet assembly based on the third TA, and performs packet assembly based on the second TA; and the terminal device sends, to the network device, a TA report MAC CE obtained based on the second TA, but does not send a TA report MAC CE obtained based on the third TA. In other words, in this case, the first TAR is not completed, that is, the terminal device does not report the third TA to the network device.

In a second case, the terminal device does not perform packet assembly based on the third TA, and performs packet assembly only based on the second TA. For example, in the preset time period, there is no uplink grant (Grant), or there is no uplink resource (for example, an uplink shared channel (uplink shared channel, UL-SCH) resource is unavailable). That is, the terminal device does not complete packet assembly in the preset time period. After the preset time period, the terminal device performs packet assembly based on the second TA. In other words, in this case, the first TAR is not completed, that is, the terminal device does not report the third TA to the network device.

In a third case, the terminal device completes the first TAR, that is, the terminal device reports the third TA to the network device. After the second TAR is triggered, the second TA is also subsequently reported to the network device. In this scenario, if a processing manner in the conventional technology is used, the terminal device determines, based on the first variation, whether to trigger the second TAR. For descriptions of the first variation, refer to the foregoing descriptions. However, by using the processing manner in the conventional technology, an incorrect TA cannot be updated within a time period. For example, after the GNSS location information #A is obtained, the third TA has not been reported to the network when the first variation is evaluated. Therefore, the first variation is evaluated based on the first TA. If the second TAR is not forcibly (or unconditionally) triggered in this case, the terminal device does not trigger the second TAR when the variation of the first TA relative to the second TA is less than the preset threshold. After the third TA is reported to the network device, the network device uses the incorrect TA (the third TA) until the TA is updated next time. After this manner is used, even if the third TA is reported to the network device, the second TA is reported to the network device soon. Therefore, the TA on the network device is updated in a timely manner.

In a fourth case, the first TAR is not triggered, that is, the terminal device does not trigger the TAR in the preset time period. After the GNSS location information #A is obtained, the TA is updated. In this case, the second TAR is triggered, the second TA is reported to the network device, and the TA value maintained by the network device is updated.

Therefore, after the terminal device obtains the GNSS location information #A, the terminal device triggers the TAR regardless of whether the first variation is greater than or equal to the preset threshold or whether the TAR is triggered in the preset time period.

It should be noted that, in this application file, packet assembly is also expressed as generation of the TA report MAC CE or generation of a MAC protocol data unit (protocol data unit, PDU).

For the foregoing problem, in a third solution, the method further includes S202-3.

S202-3: The terminal device triggers a first TAR between the first moment and the second moment. After obtaining the GNSS location information #A, the terminal device determines, based on a first variation, whether to cancel the first TAR. The terminal device cancels the first TAR when the first variation is less than a preset threshold.

The first TAR is used to report a third TA. The first variation is a variation of a first TA relative to a second TA. For descriptions of the first TA and the second TA, refer to the foregoing descriptions.

It should be noted that, equivalently, between the first moment and the second moment may also be expressed as during the GAP, or may be expressed as in the preset time period.

It may be understood that when the first variation is less than the preset threshold, the terminal device does not trigger a second TAR, where the second TAR is used to report the second TA.

In other words, when the first variation is less than the preset threshold, the first TAR is not completed, that is, the terminal device does not report the third TA to the network device.

For the foregoing problem, in a fourth solution, the method further includes S202-4.

S202-4: The terminal device is prohibited from generating a TA report MAC CE between the first moment and the second moment, where the TA report MAC CE is used to report a TA.

It should be noted that, equivalently, between the first moment and the second moment may also be expressed as during the GAP, or may be expressed as in the preset time period.

In this embodiment of this application, between the first moment and the second moment (or in the preset time period), the terminal device is prohibited from generating the TA report MAC CE. For example, it may be specified in a protocol that the terminal device is prohibited from generating the TA report MAC CE during the GNSS measurement (or in the preset time period). Optionally, it may be further specified in a protocol that, between the first moment and the second moment (or expressed as in the preset time period or during the GAP), the terminal device is prohibited from using a UL-SCH resource and triggering a scheduling request. Alternatively, it may be expressed as that a UL-SCH resource is unavailable between the first moment and the second moment (or in the preset time period), and triggering of a scheduling request is prohibited in the preset time period.

For S202-4, between the first moment and the second moment, the terminal device may trigger a first TAR, or may not trigger a first TAR. The first TAR is used to report a third TA.

If the first TAR is triggered, because the terminal device is prohibited from generating the TA report MAC CE between the first moment and the second moment, the terminal device does not generate the TA report MAC CE based on the third TA. In other words, the first TAR is not completed, that is, the terminal device does not report the third TA to the network device.

After obtaining the GNSS location information #A, the terminal device may determine a second TA based on the GNSS location information #A. It may be understood that the terminal device uses the latest TA when generating the TA report MAC CE. Compared with the third TA, the second TA is the latest TA. Therefore, the terminal device generates the TA report MAC CE based on the second TA, and does not generate the TA report MAC CE based on the third TA. Therefore, the second TA is finally reported to the network device.

Optionally, the terminal device may determine a first variation. When the first variation is greater than or equal to a preset threshold, the terminal device generates the TA report MAC CE based on the second TA; otherwise, the terminal device cancels the first TAR. For descriptions of the first variation, refer to the foregoing descriptions.

In addition, in another case, the terminal device triggers the TAR before the preset time period. However, because the terminal device cannot perform reporting in the preset time period, a corresponding TA value is not reported to the network. The closer to the preset time period, the less accurate the TA obtained by the terminal device. Therefore, it is also considered that the TA value that is not reported is inaccurate, and should not be reported to the network side. Therefore, the first moment to the second moment may be extended to a third moment to the second moment, where the third moment is before the first moment. In addition, a time interval between the third moment and the first moment may be preconfigured.

In other words, for this case, the first solution may be extended to: The terminal device is prohibited from triggering a TAR between the third moment and the second moment.

The third solution may be extended to: The terminal device triggers a first TAR between the third moment and the second moment. After obtaining the GNSS location information #A, the terminal device determines, based on a first variation, whether to cancel the first TAR. The terminal device cancels the first TAR when the first variation is less than a preset threshold.

The fourth solution may be extended to: The terminal device is prohibited from generating a TA report MAC CE between the third moment and the second moment, where the TA report MAC CE is used to report a TA.

The following describes a second problem to which this application is directed.

Currently, a CHO trigger mechanism of the terminal device in the preset time period is not perfect enough. On one hand, it is not specified in a current CHO trigger mechanism whether the terminal device can trigger the CHO in the preset time period. On the other hand, because the GNSS information and the RSRP are not updated in the preset time period, it is not specified in the current CHO trigger mechanism that if the CHO is triggered in the preset time period, the GNSS information or the RSRP information before the update or updated corresponding information should be used to evaluate whether a trigger condition is met.

For this problem, as shown in FIG. 6, this application provides a method 300. Specifically, the method 300 includes the following steps.

S301: A terminal device obtains first GNSS location information in a preset time period.

For a process of obtaining the first GNSS location information, refer to S201.

S302: The terminal device determines whether to trigger CHO in the preset time period.

The following describes S302 in detail in different cases.

### Case 1:

The terminal device determines that triggering of the CHO is prohibited in the preset time period. For example, it may be specified in a protocol that the terminal device is prohibited from triggering the CHO in the preset time period.

That the terminal device is prohibited from triggering the CHO in the preset time period may also mean that the terminal device does not evaluate a CHO trigger condition in the preset time period. For example, evaluation on execution of the CHO is not performed in the preset time period based on GNSS location information and/or RSRP that are/is not updated.

According to this embodiment of this application, reliability (or accuracy) of GNSS location information or RSRP of the terminal device is low in the preset time period. If the terminal device evaluates, based on the GNSS information or the RSRP with low reliability, whether to trigger the CHO, a handover occasion may be inaccurate (handover is performed too early or too late), or handover is performed when a handover condition is not met (for example, actual RSRP of a target cell is poor, and the terminal device cannot successfully switch to the target cell). Therefore, the terminal device may be prohibited from triggering the CHO in the preset time period.

### Case 2:

The terminal device obtains the first GNSS location information in the preset time period, where a moment at which the terminal device starts to obtain the first GNSS location information is a first moment, and a moment at which the terminal device completes obtaining the first GNSS location information is a second moment.

The terminal device determines that triggering of the CHO based on the first GNSS location information is allowed after the second moment. For example, it may be specified in a protocol that the terminal device may trigger the CHO after GNSS measurement is completed.

According to this embodiment of this application, after the GNSS measurement is completed, the first GNSS location information (that is, updated GNSS location information) is obtained. In this case, the preset time period may not end. Before the preset time period ends, the terminal device may evaluate, in advance by using the first GNSS location information, whether to trigger the CHO, so that the terminal device switches to a target network device in a timely manner.

### Case 3:

The terminal device determines that triggering of the CHO is allowed in the preset time period.

In this case, for different scenarios, information used by the terminal device to determine whether to trigger the CHO may be different. Specifically, there may be six scenarios in the following Table 1.

**Table 1**

| | Time based CHO | Location based CHO | Measurement based CHO |
|---|---|---|---|
| Fixed cell (fixed cell) | Scenario #1 | Scenario #2 | Scenario #3 |
| Moving cell (moving cell) | Scenario #4 | Scenario #5 | Scenario #6 |

### In Case 3, for Scenario 1:

The terminal device performs CHO to switch from a source network device to the target network device. The terminal device may determine remaining service duration, where the remaining service duration is remaining duration in which the source network device can provide a service for the terminal device.

Further, if the remaining service duration is less than a preset threshold, the terminal device determines that triggering of the CHO based on second GNSS location information and/or first RSRP is allowed in the preset time period, where both the second GNSS location information and the first RSRP are obtained by the terminal device before the preset time period. In other words, in this case, the terminal device may evaluate, based on GNSS location information and/or RSRP that are/is not updated, whether to perform the CHO.

Alternatively, if the remaining service duration is greater than a preset threshold, the terminal device determines that triggering of the CHO based on the first GNSS location information is allowed in the preset time period. In other words, if the remaining service duration is greater than the preset threshold, after the GNSS measurement is completed, the terminal device may evaluate, based on the first GNSS location information (that is, updated GNSS location information), whether to trigger the CHO.

Alternatively, if the remaining service duration is greater than a preset threshold, the terminal device determines that triggering of the CHO based on second RSRP is allowed after the preset time period. In other words, if the remaining service duration is greater than the preset threshold, the terminal device may update the first RSRP after the preset time period to obtain the second RSRP (that is, updated RSRP), and evaluate, based on the second RSRP, whether to trigger the CHO.

### For Scenario 2:

Information used by the terminal device to evaluate whether to trigger the CHO is the same as that in Scenario 1, and details are not described herein again.

### For Scenario 3:

The terminal device may determine remaining service duration, where the remaining service duration is remaining duration in which the source network device can provide a service for the terminal device.

Further, if the remaining service duration is less than a preset threshold, the terminal device determines that whether to trigger the CHO is allowed to be evaluated based on first RSRP in the preset time period. For descriptions of the first RSRP, refer to the foregoing Scenario 1.

Alternatively, if the remaining service duration is greater than a preset threshold, the terminal device determines that whether to trigger the CHO is allowed to be evaluated based on second RSRP after the preset time period. For descriptions of the second RSRP, refer to the foregoing Scenario 1.

### For Scenario 4:

Information used by the terminal device to evaluate whether to trigger the CHO is the same as that in Scenario 1, and details are not described herein again.

### For Scenario 5:

The terminal device determines that whether to trigger the CHO is allowed to be evaluated based on second GNSS location information and/or first RSRP in the preset time period. For descriptions of the second RSRP and the first RSRP, refer to the foregoing Scenario 1.

### For Scenario 6:

The terminal device determines that whether to trigger the CHO is allowed to be evaluated based on first RSRP in the preset time period. For descriptions of the first RSRP, refer to the foregoing Scenario 1.

S303: The terminal device performs a corresponding action based on a determining result in S302.

According to this embodiment of this application, the CHO trigger mechanism during the GNSS measurement performed by the terminal device is further improved.

The following describes a third problem to which this application is directed.

In a process of performing radio link monitoring, cell selection, serving cell measurement, neighboring cell measurement, system information reading (or system message reading), or radio link reestablishment, the terminal device starts a corresponding timer, and performs a corresponding operation when the corresponding timer expires. During running of the timer, the terminal device or a network side may trigger GNSS measurement. For some specific terminal devices (for example, an IoT NTN terminal device), the terminal device cannot perform a communication process (or the terminal device cannot perform signaling/message receiving and sending) and a GNSS measurement process at the same time. If the terminal device performs GNSS measurement before the timer expires, in this case, a communication module of the terminal device cannot perform signaling/message receiving and sending. Consequently, the timer expires, and the terminal device performs an incorrect action when the timer expires.

Examples are listed below for description:

### Example 1:

In an RLF-related procedure, if the terminal device is out of synchronization with a network, a physical layer reports an out-of-synchronization indication to a higher layer (higher layer). Further, if the terminal device consecutively receives N310 out-of-synchronization indications (out-of-sync), the terminal device starts a timer T310. If the terminal device receives N311 consecutive in-synchronization indications (in sync) before T310 expires (or before "timeout"), the terminal device restores a radio link to the network. Otherwise, the radio link restoration fails, and the terminal device needs to perform cell reselection. Therefore, after T310 expires, the terminal device starts T311, and the terminal device performs cell reselection during running of T311. If the terminal device selects a cell before T311 expires, the terminal device starts T301, and the terminal device reselects a target cell, and sends an RRC reestablishment request to the network device. If the terminal device does not select a cell before T311 expires, the terminal device enters an idle state. If no RRC reestablishment response from the network side is received before T301 expires, the terminal device enters an idle state.

It may be learned from the foregoing descriptions that, in the RLF-related procedure, the terminal device may start one or more timers. During running of the timer, the terminal device needs to perform communication, for example, needs to receive and send a measurement signal, or needs to receive and send a reference signal, or needs to receive and send signaling. If the terminal device starts the GNSS measurement during an RLF, for the IoT NTN terminal device, the terminal device cannot receive and send a reference signal or signaling during GNSS obtaining. Therefore, during the GNSS obtaining, a stop condition of the timer cannot be met. During the GNSS measurement or after the GNSS measurement ends, the timer may expire. As a result, the terminal device performs an incorrect operation.

It should be noted that during the GNSS obtaining may also be equivalent to during a GNSS measurement GAP. The terminal device in a connected state performs GNSS measurement during a configured GAP. The GAP is a time range determined by the network device or the terminal device.

For example, during running of T310, the terminal device triggers the GNSS measurement. In this case, the terminal device cannot receive an in-synchronization indication. As a result, T310 expires.

For another example, during running of T311, the terminal device triggers the GNSS measurement. In this case, the terminal device cannot receive a SIB message and a neighboring cell reference signal, and consequently cannot reselect the target cell. As a result, T311 expires.

### Example 2:

System information reading by the terminal device is also affected by the GNSS measurement.

For example, a system information block (system information block, SIB) 31 includes satellite and synchronization-related information of an NTN serving cell, and a SIB 3x (a name of the SIB is not limited in this application) includes satellite and synchronization-related information of an NTN neighboring cell. Satellite assistance information carried in the SIB 31 and the SIB 3x has a validity time. After the validity time expires, the terminal device re-reads the SIB 31 and the SIB 3x. For example, ephemeris information and a CommonTA parameter carried in the foregoing SIB message have a validity time (ul-SyncValidityDuration). When the foregoing information expires, the SIB 31 or the SIB 3x needs to be re-read.

For example, T317 is used to monitor a validity period of the ephemeris information and the CommonTA. After T317 expires, the terminal device needs to re-read the SIB 31 and start T318. If the terminal device still does not read the SIB 31 after T318 expires, the terminal device performs an RLF-related procedure.

Therefore, during running of T318, if the terminal device performs GNSS measurement, the terminal device cannot read the SIB 31, and consequently T318 expires.

It may be understood that a similar problem also exists for the SIB 3x.

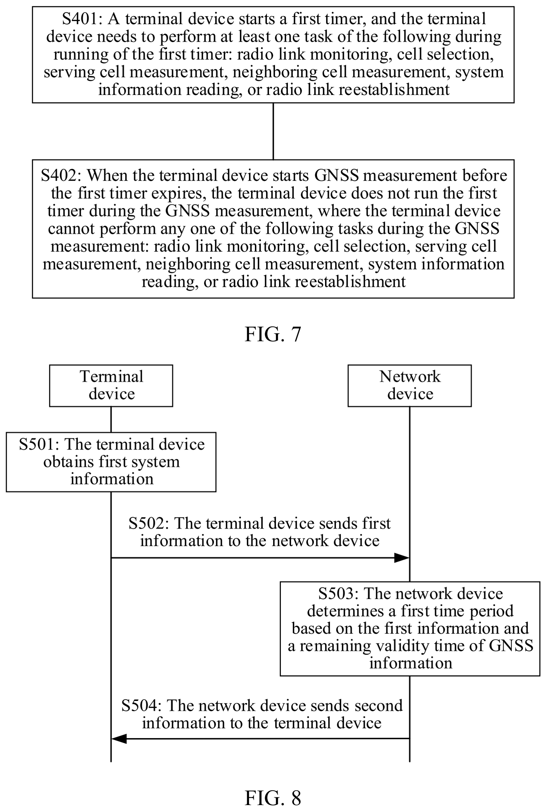

For the foregoing third problem, as shown in FIG. 7, this application provides a method 400. Specifically, the method 400 includes the following steps.

S401: A terminal device starts a first timer, and the terminal device needs to perform at least one task of the following during running of the first timer: radio link monitoring, cell selection, serving cell measurement, neighboring cell measurement, system information reading, or radio link reestablishment.

In other words, the terminal device needs to perform communication (or use a communication module) during running of the first timer. For example, the terminal device needs to receive and send a measurement signal, or receive and send a reference signal, or needs to receive and send signaling.

For example, the first timer is a timer related to an RLF. For example, the first timer is any one of T310, T311, or T301.

For example, the first timer is a timer related to system information reading. For example, the first timer is T318.

The first timer may be a timer whose function is similar to that of the exemplary timer, and a name of the timer is not limited in this application.

S402: When the terminal device starts GNSS measurement before the first timer expires, the terminal device does not run the first timer during the GNSS measurement, where the terminal device cannot perform any one of the following tasks during the GNSS measurement: radio link monitoring, cell selection, serving cell measurement, neighboring cell measurement, system information reading, or radio link reestablishment.

It should be noted that during the GNSS measurement may be extended to during a GNSS measurement GAP, start of the GNSS measurement may be extended to start of the GNSS measurement GAP, and the end of the GNSS measurement may be extended to the end of the GNSS measurement GAP. The extension is applicable to methods 400 to 800.

First, that the terminal device starts the GNSS measurement is described below.

### Case 1:

A network device triggers the GNSS measurement. The network device configures, for the terminal device, a time period for performing the GNSS measurement (for example, the time period may be denoted as a time period #A). Correspondingly, the terminal device receives information about the time period #A. Further, the terminal device performs GNSS measurement based on the information about the time period #A.

For example, the network device may send the information about the time period #A to the terminal device by using RRC signaling. The information about the time period #A may include a start subframe number of the time period #A and a length of the time period #A.

The terminal device may determine a time required for the GNSS measurement, and the terminal device may send, to the network device, the time required for the GNSS measurement as assistance information. Further, the network device may determine the length of the time period #A based on information about the time required for the GNSS measurement. For example, the length of the time period #A may be greater than that of the time required for the GNSS measurement. In addition, the terminal device may send a remaining validity time of GNSS information to the network device. The network device may determine a start moment and/or an end moment of the time period #A based on the remaining validity time of the GNSS information. For example, the end moment of the time period #A is before the end of the remaining validity time of the GNSS information. Further, the network device sends the information about the time period #A to the terminal device by using the RRC signaling.

For another example, the network device may send the information about the time period #A to the terminal device by using MAC CE signaling. The information about the time period #A may include a start moment of the time period #A and a length of the time period #A. For example, the start moment of the time period #A is n+X, where n represents a number of a last subframe in which the terminal device receives a MAC CE, and X represents a predefined value, or X represents a value configured by the network device for the terminal device.

### Case 2:

The terminal device triggers the GNSS measurement, and obtains GNSS location information in a time period (for example, the time period may be denoted as a time period #B). In this case, the terminal device may determine a time required for the GNSS measurement, and a length of the time period #B is the time required for the GNSS measurement. Optionally, the terminal device may send, to a network device, indication information indicating that the terminal device starts to perform GNSS measurement. Optionally, the indication information includes information about a moment at which the GNSS measurement starts. The network device and the terminal device may align time periods #B based on the indication information. In other words, the network device may learn that the terminal device performs GNSS measurement in the time period #B.

The following describes "the terminal device does not run the first timer during the GNSS measurement".

### Case 1:

Optionally, if the first timer is running before the GNSS measurement starts, the terminal device suspends the first timer, and resumes the first timer after the GNSS measurement is completed.

In addition, optionally, after the GNSS measurement is completed, the terminal device may determine whether a condition for starting the first timer is met, and when the condition for starting the first timer is met, the terminal device starts the first timer.

For example, the first timer is T310 related to an RLF, and the condition for starting the first timer may be that the terminal device consecutively receives N310 out-of-synchronization indications.

The terminal device clears a first counter before the GNSS measurement starts. For example, in a radio link monitoring process, if a higher layer of the terminal device receives an out-of-synchronization indication reported by a physical layer, a counter N310 starts counting. If the terminal device needs to perform GNSS measurement in a counting process, N310 needs to be cleared. If an out-of-synchronization indication is still received after the GNSS measurement ends, the out-of-synchronization indication needs to be counted again, and T310 is started only after N310 out-of-synchronization indications are consecutively received.

### Case 2:

Optionally, if the first timer is running before the GNSS measurement starts, the terminal device stops the first timer. After the GNSS measurement is completed, the terminal device starts a second timer. The first timer and the second timer are of a same type, and preset timeout duration of the first timer is the same as preset timeout duration of the second timer.

For example, both the first timer and the second timer are timers T310 related to an RLF, the preset timeout duration of the first timer may be a seconds, and the preset timeout duration of the second timer may also be a seconds.

In addition, optionally, after the GNSS measurement is completed, the terminal device may determine whether a condition for starting the second timer is met, and when the condition for starting the second timer is met, the terminal device starts the second timer.

For example, the second timer is T311 related to an RLF, and the condition for starting the second timer may be that the terminal device does not consecutively receive N311 out-of-synchronization indications before T310 expires.

### Case 3:

Optionally, if the first timer is running before the GNSS measurement starts, the terminal device stops the first timer. After the GNSS measurement is completed, the terminal device starts a second timer. The first timer and the second timer are of a same type, preset timeout duration of the second timer is a first value, and the first value is equal to preset timeout duration of the first timer minus running duration of the first timer.

For example, if the preset timeout duration of the first timer is a seconds, and the running duration of the first timer is b seconds, the first value = a - b.

In addition, optionally, after the GNSS measurement is completed, the terminal device may determine whether a condition for starting the second timer is met, and when the condition for starting the second timer is met, the terminal device starts the second timer. For details, refer to the foregoing descriptions.

### Case 4:

Optionally, if the first timer is running before the GNSS measurement starts, the terminal device stops the first timer and starts a second timer. The first timer and the second timer are of a same type, preset timeout duration of the second timer is a second value, and the second value is equal to preset timeout duration of the first timer plus duration required for the GNSS measurement and minus running duration of the first timer.

For example, if the preset timeout duration of the first timer is a seconds, the duration required for the GNSS measurement is b seconds, and the running duration of the first timer is c seconds, the second value = a + b - c.

In addition, optionally, after the GNSS measurement is completed, the terminal device may determine whether a condition for starting the second timer is met, and when the condition for starting the second timer is met, the terminal device starts the second timer. For details, refer to the foregoing descriptions.

### Case 5:

Optionally, if the first timer is running before the GNSS measurement starts, the terminal device stops the first timer and starts a second timer. The first timer and the second timer are of a same type, preset timeout duration of the second timer is a third value, and the third value is equal to preset timeout duration of the first timer plus duration required for the GNSS measurement.

For example, if the preset timeout duration of the first timer is a seconds, and the duration required for the GNSS measurement is b seconds, the third value = a + b.

### Case 6:

Optionally, if the first timer is running before the GNSS measurement starts, the terminal device stops the first timer.

Optionally, the terminal device clears a first counter before the GNSS measurement starts. For example, in a radio link monitoring process, if a higher layer of the terminal device receives an out-of-synchronization indication reported by a physical layer, a counter N310 starts counting. If the terminal device needs to perform GNSS measurement in a counting process, N310 needs to be cleared. If an out-of-synchronization indication is still received after the GNSS measurement ends, the out-of-synchronization indication needs to be counted again, and T310 is started only after N310 out-of-synchronization indications are consecutively received.

For another example, in a radio link monitoring process, if a higher layer of the terminal device receives an in-synchronization indication reported by a physical layer, N311 starts counting. If the terminal device needs to perform GNSS measurement in a counting process, N311 needs to be cleared. If an in-synchronization indication is still received after the GNSS measurement ends, the in-synchronization indication needs to be counted again, and it can be determined that the radio link of the terminal device is restored only after N311 in-synchronization indications are consecutively received.

According to the method 400 provided in this application, when the terminal device starts the GNSS measurement before the first timer expires, the terminal device does not run the first timer during the GNSS measurement, so that timeout of a related timer caused by the GNSS measurement can be avoided, thereby reducing a case in which the terminal device performs an incorrect action.

For the foregoing third problem, for system information reading, as shown in FIG. 8, this application further provides a method 500. Specifically, the method 500 includes the following steps.

S501: A terminal device obtains first system information.

The first system information includes satellite assistance information. The satellite assistance information includes at least one of ephemeris information, a delay parameter (that is, a common TA parameter) from a satellite to a reference point, validity duration (for example, ntn-UlSyncValidityDuration) of the satellite assistance information, and a reference time (for example, epochTime) corresponding to the satellite assistance information.

S502: The terminal device sends first information to a network device. Correspondingly, the network device receives the first information.

The first information indicates a remaining validity time of the satellite assistance information obtained by the terminal device. The remaining validity time of the satellite assistance information is a time interval between an expiration time of the satellite assistance information and the reference time. For example, the remaining validity time of the satellite assistance information may be determined based on at least one of the following: the validity duration of the satellite assistance information, the reference time corresponding to the satellite assistance information, and a time for which the satellite assistance information has taken effect. For example, the remaining validity time of the satellite assistance information may be obtained by subtracting the time for which the satellite assistance information has taken effect from the validity duration of the satellite assistance information.

Optionally, the terminal re-obtains the satellite assistance information after the remaining validity time of the satellite assistance information ends.

Optionally, the first information further indicates a reference time point of the remaining validity time of the satellite assistance information.

S503: The network device determines a first time period based on the first information and a remaining validity time of GNSS information.

The first time period is used by the terminal device to perform GNSS measurement, the first time period does not overlap a second time period, and the second time period is used by the terminal device to re-read system information.

For example, an end moment of the first time period is before a start moment of the second time period.

For another example, a start moment of the first time period is after an end moment of the second time period.

S504: The network device sends second information to the terminal device. Correspondingly, the terminal device receives the second information.

The second information indicates the first time period.

Optionally, the terminal device may perform GNSS measurement in the first time period based on the second information, or the terminal device may re-read the system information in the second time period.

According to the method 500 provided in this application, a time period in which the terminal device performs GNSS measurement does not overlap a time period in which the terminal device re-reads the system information, so that timeout of a related timer caused by the GNSS measurement can be avoided, thereby reducing a case in which the terminal device performs an incorrect action.

The following describes a fourth problem to which this application is directed.

If a remaining service time of the terminal device in a current serving cell (denoted as a first cell) is about to expire, the terminal device may perform switching to switch to a second cell. In a handover process, if a validity time of the GNSS information is also about to expire, the terminal device needs to perform GNSS measurement, to update the GNSS information. In other words, a time period for performing the GNSS measurement overlaps a time period for performing switching. In this case, if the terminal device first performs GNSS measurement, the terminal device may not successfully switch to the second cell before the remaining service time of the current serving cell expires. As a result, the switching fails. After the switching fails, the terminal device reselects a cell for access. If the terminal device first performs cell switching, because the validity time of the GNSS information may have expired after the switching is completed, using the expired GNSS information causes the terminal device to fail to perform synchronization in the second cell.

It should be noted that a remaining service time of a cell in this application is a moment at which the cell stops serving a region currently covered by the cell or an end moment at which the cell provides a service for the terminal device. For example, for a quasi-Earth fixed cell (quasi-Earth fixed cell) in an NTN, the cell broadcasts the moment, for example, t-service.

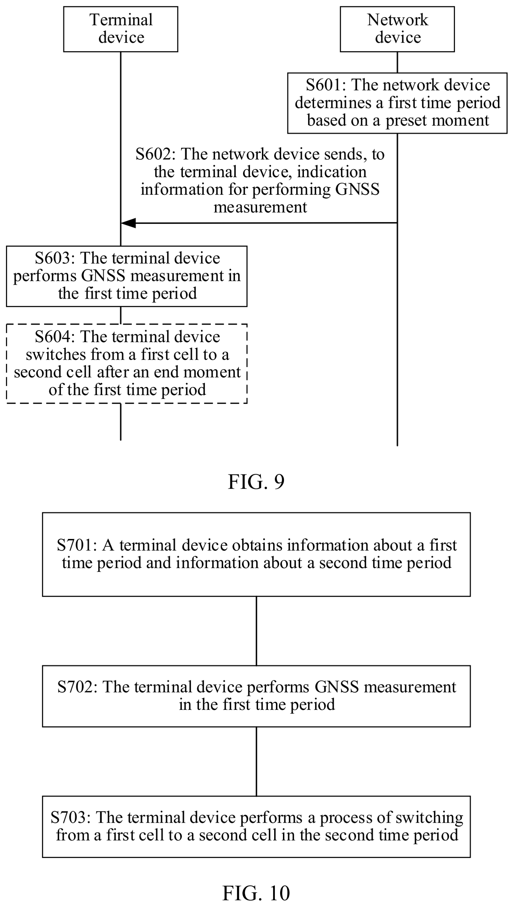

For the fourth problem, as shown in FIG. 9, this application provides a method 600. Specifically, the method 600 includes the following steps.

S601: A network device determines a first time period based on a preset moment.

An end moment of the first time period is before the preset moment, the first time period is used by a terminal device to perform GNSS measurement, and the preset moment is an end moment at which a first cell can provide a service for the terminal device. For example, the preset moment may be denoted as t-service.

Optionally, a time interval between the end moment of the first time period and the preset moment is greater than or equal to a preset threshold.

Optionally, when the preset moment is before an expiration moment of current GNSS information of the terminal device, and a distance between the preset moment and the expiration moment of the GNSS information is less than a threshold, the network device determines the first time period, so that the end moment of the first time period is before the preset moment. Optionally, the threshold is a length of a GNSS measurement GAP, or the threshold is a time required for the GNSS measurement reported by the terminal device. Optionally, the end moment of the first time period is before the preset moment.

Optionally, when the preset moment is after an expiration moment of current GNSS information of the terminal device, and a distance between the preset moment and the expiration moment of the GNSS information is less than a threshold, the network device determines the first time period, so that the end moment of the first time period is before the preset moment, or a start moment of the first time period is before the expiration moment of the GNSS information. Optionally, the threshold is a length of a GNSS measurement GAP, or the threshold is a time required for the GNSS measurement reported by the terminal device.

Optionally, the network device determines an appropriate end moment of the first time period, to ensure that the GNSS information of the terminal device is valid in a process in which the terminal device switches from the first cell to a second cell.

S602: The network device sends, to the terminal device, indication information for performing the GNSS measurement.

Optionally, the indication information indicates information about the first time period. Correspondingly, the terminal device receives the information about the first time period.

For example, the network device may send the information about the first time period to the terminal device by using RRC signaling. The information about the first time period may include at least one of the following: a start subframe number of the first time period and a length of the first time period.

For another example, the network device may send the information about the first time period to the terminal device by using MAC CE signaling. The information about the first time period may include at least one of the following: a start moment of the first time period and a length of the first time period. For example, the start moment of the first time period is n+X, where n represents a number of a last subframe in which a MAC CE is received, and X represents a predefined value, or X represents a value configured by the network device.

For another example, after receiving the indication information, the terminal device starts the GNSS measurement in the first time period according to a rule agreed on with the network device in advance.

S603: The terminal device performs GNSS measurement in the first time period.

S604: Optionally, the terminal device switches from the first cell to the second cell after the end moment of the first time period.

It may be understood that the switching from the first cell to the second cell may be common switching, conditional handover, or switching in another form. This is not limited in this application.

For example, the terminal device performs a process of switching from the first cell to the second cell between the end moment of the first time period and the preset moment. For example, the terminal device receives, from the network device after the end moment of the first time period, a switching command of switching from the first cell to the second cell.

For another example, the terminal device may perform a process of switching from the first cell to the second cell after the preset moment.

For another example, the terminal device completes a process of switching from the first cell to the second cell after the end moment of the first time period.

According to the method 600 provided in this application, when a remaining service time of the terminal device is close to an expiration time of a remaining validity time of the current GNSS, a network side needs to configure appropriate GNSS measurement for the terminal device, so that an end moment of the GNSS measurement is before the preset moment. Therefore, the GNSS information of the terminal device remains valid in a switching process, thereby ensuring that the terminal device can access or be synchronized to a target cell.

For the fourth problem, as shown in FIG. 10, this application provides a method 700. Specifically, the method 700 includes the following steps.

S701: A terminal device obtains information about a first time period and information about a second time period.

An end moment of the second time period is after an end moment of the first time period. The first time period is used by the terminal device to perform GNSS measurement. The second time period is used by the terminal device to perform a process of switching from a first cell to a second cell. The second time period may also be understood as a time window in which the terminal device switches from the first cell to the second cell. For example, the second time period is a time window in time based conditional handover.

The following describes several manners in which the terminal device obtains the information about the first time period and the information about the second time period.

### Manner 1:

A network device configures the information about the first time period and the information about the second time period for the terminal device. Correspondingly, the terminal device receives the information about the first time period and the information about the second time period.
t-service corresponding to a current serving cell is in the second time period. The end moment of the second time period is after the end moment of the first time period.

Optionally, a length of the second time period is greater than a length of the first time period. The network device sends indication information for performing the GNSS measurement to the terminal device between a moment corresponding to the length of the first time period and the end moment of the second time period.

Optionally, the first time period and the second time period may be configured at the same time, or the first time period may be configured before the second time period, or the second time period may be configured before the first time period.

Optionally, the second time period may be configured after the first time period is configured and delivered to the terminal device, or the first time period may be configured after the second time period is configured and delivered.

### Manner 2:

A network device configures information about a third time period for the terminal device. The third time period is used by the terminal device to perform the process of switching from the first cell to the second cell. For example, the third time period is a time window in time based conditional handover.

The network device configures the information about the first time period for the terminal device, and the terminal device performs GNSS measurement in the first time period.

The network device determines that the first time period overlaps the third time period. For example, an end moment of the third time period is before the end moment of the first time period, or an end moment of the third time period is the same as the end moment of the first time period. Optionally, there may be no restriction on a sequence between the network device configuring the information about the first time period for the terminal device and the network device configuring the information about the second time period for the terminal device. For example, after the network device configures the information about the third time period, the network device determines that an end moment of the current GNSS measurement of the terminal device is after the end moment of the third time period, and the network device configures the information about the second time period for the terminal device.

The network device configures the information about the second time period for the terminal device, where the end moment of the second time period is after the end moment of the first time period. For example, the second time period is a time window in time based conditional handover.

Optionally, the end moment of the second time period is after t-service corresponding to a current serving cell. Optionally, a start moment of the second time period is before t-service corresponding to a current serving cell.

### Manner 3:

A network device configures information about a third time period for the terminal device. The third time period is used by the terminal device to perform the process of switching from the first cell to the second cell. For example, the third time period is a time window in time based conditional handover.

The terminal device triggers the GNSS measurement, and the terminal device sends the information about the first time period to the network device.

The network device determines that the first time period overlaps the third time period. For example, an end moment of the third time period is before the end moment of the first time period, or an end moment of the third time period is the same as the end moment of the first time period.

The network device configures the information about the second time period for the terminal device. The second time period is used to update the third time period, or conditional handover corresponding to the second time period is an update of conditional handover corresponding to the third time period (for example, the network device deletes the conditional handover corresponding to the third time period, and the network device configures the conditional handover corresponding to the second time period), and the end moment of the second time period is after the end moment of the first time period. Optionally, the end moment of the second time period is after t-service corresponding to a current serving cell. Optionally, a start moment of the second time period is before t-service corresponding to a current serving cell.

S702: The terminal device performs GNSS measurement in the first time period.

S703: The terminal device performs the process of switching from the first cell to the second cell in the second time period.

According to the method 700 provided in this application, an end moment at which the terminal device performs cell switching is after an end moment at which the GNSS measurement is performed, so that the terminal device still has an opportunity to perform cell switching after the end moment of the GNSS measurement, to switch to a target cell.

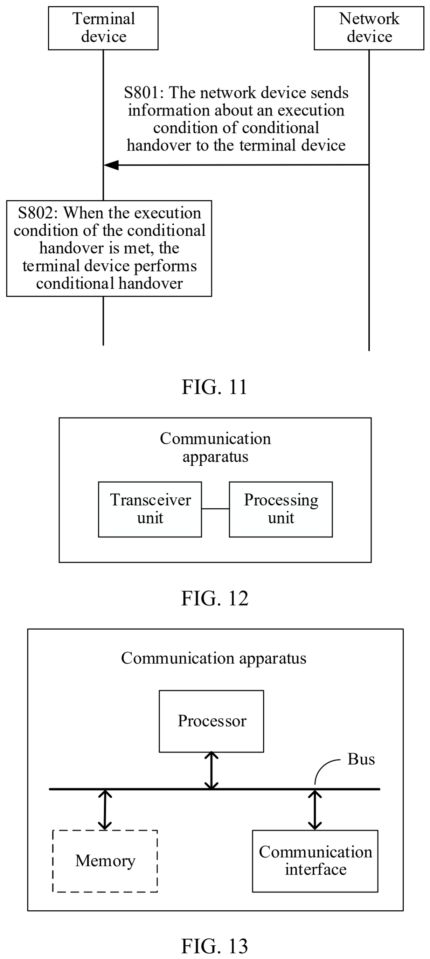

For the fourth problem, as shown in FIG. 11, this application provides a method 800. Specifically, the method 800 includes the following steps.

S801: A network device sends information about an execution condition of conditional handover to a terminal device. Correspondingly, the terminal device receives the information about the execution condition of the conditional handover.

The execution condition of the conditional handover includes that GNSS information is valid. In other words, in the method in this application, an existing execution condition of the conditional handover is enhanced (or added), so that in addition to determining the existing handover execution condition, for example, a location based criterion, a time based criterion, or a measurement event based criterion, whether the GNSS information is valid further needs to be determined during decision of the execution condition of the conditional handover.

Optionally, that the GNSS information is valid includes that the GNSS information does not expire during decision of the conditional handover.

Optionally, that the GNSS information is valid includes that a remaining validity time of the GNSS information is greater than or equal to a preset threshold during decision of the conditional handover.

S802: When the execution condition of the conditional handover is met, the terminal device performs conditional handover.

For example, if the existing execution condition of the conditional handover is met and the GNSS information is valid, the terminal device performs conditional handover.

For another example, if the existing execution condition of the conditional handover is met, and the GNSS information is invalid, the terminal device performs GNSS measurement to update the GNSS information.

For another example, if the existing execution condition of the conditional handover is met, and the remaining validity time of the GNSS is greater than the preset threshold, the terminal device performs conditional handover.

For another example, if the existing execution condition of the conditional handover is met, and the remaining validity time of the GNSS is less than the preset threshold, the terminal device performs GNSS measurement to update the GNSS information.

According to the method 800 provided in this application, the existing execution condition of the conditional handover is enhanced, so that the execution condition of the conditional handover includes that the GNSS information is valid, thereby avoiding a case in which the GNSS information has been invalid after handover is completed.

The foregoing describes the method 200 to the method 800 provided in this application. FIG. 12 shows a communication apparatus according to an embodiment of this application. The communication apparatus includes a transceiver unit and a processing unit.

The transceiver unit may be configured to implement a corresponding information receiving and sending function. The transceiver unit may also be referred to as a communication interface or a communication unit. The processing unit may be configured to perform a processing operation.

For example, the apparatus further includes a storage unit. The storage unit may be configured to store instructions and/or data. The processing unit may read the instructions and/or the data in the storage unit, so that the apparatus implements actions of an apparatus in the foregoing method embodiments.

In an implementation, the apparatus may be the terminal device in the foregoing embodiments, or may be a component (for example, a chip) of the terminal device. The transceiver unit and the processing unit may be configured to implement related operations of the terminal device.

For example, the processing unit may be configured to perform the operation of obtaining the GNSS location information in the preset time period in S201.

In addition, optionally, the processing unit may be configured to perform the operation of prohibiting triggering of the TAR between the first moment and the second moment in S202-1.

Alternatively, optionally, the processing unit may be configured to perform the operation of triggering the TAR after obtaining the GNSS location information #A in S202-2.

Alternatively, optionally, the processing unit may be configured to perform: the operation of triggering the first TAR between the first moment and the second moment in S202-3; the operation of determining, after obtaining the GNSS location information #A and based on the first variation, whether to cancel the first TAR; and the operation of canceling the first TAR when the first variation is less than the preset threshold.

Alternatively, optionally, the processing unit may be configured to perform the operation of prohibiting generation of the TA report MAC CE between the first moment and the second moment in S202-4.

The transceiver unit may be configured to perform a corresponding operation of sending a data packet.

For another example, the processing unit may be configured to perform the operation of obtaining the first GNSS location information in the preset time period in S301, the operation of determining whether to trigger the CHO in the preset time period in S302, and the like.

In an implementation, the apparatus may be the terminal device in the foregoing embodiments, and the processing unit may be configured to perform S401 and S402.

In an implementation, the apparatus may be the terminal device in the foregoing embodiments, and the transceiver unit may be configured to perform S502 and S504. Alternatively, the apparatus may be the network device in the foregoing embodiments, and the processing unit may be configured to perform S503.

In an implementation, the apparatus may be the terminal device in the foregoing embodiments, and the processing unit may be configured to perform S603 and S604. Alternatively, the apparatus may be the network device in the foregoing embodiments, the processing unit may be configured to perform S601, and the transceiver unit may be configured to perform S602.

In an implementation, the apparatus may be the terminal device in the foregoing embodiments, the transceiver unit may be configured to perform S701, and the processing unit may be configured to perform S702 and S703.

In an implementation, the apparatus may be the terminal device in the foregoing embodiments, and the processing unit may be configured to perform S802. Alternatively, the apparatus may be the network device in the foregoing embodiments, and the transceiver unit may be configured to perform S801.

It may be understood that a specific process in which the units perform the foregoing corresponding steps is described in detail in the foregoing method embodiments, and for brevity, details are not described herein again.

The transceiver unit may be replaced with a transceiver (for example, a sending unit in the transceiver unit may be replaced with a transmitter, and a receiving unit in the transceiver unit may be replaced with a receiver), and another unit such as the processing unit may be replaced with a processor, to respectively perform receiving and sending operations and processing-related operations in the foregoing method embodiments.

In addition, the transceiver unit may alternatively be a transceiver circuit (for example, may include a receiving circuit and a sending circuit), and the processing unit may be a processing circuit.

FIG. 13 shows another communication apparatus according to an embodiment of this application. The communication apparatus includes a processor and a communication interface. The processor is configured to execute a program or instructions stored in a memory, or read data stored in the memory, to perform related actions in the foregoing method embodiments. For example, there may be one or more processors. The communication interface is configured to receive and/or send a signal.

For example, the communication apparatus may further include a memory, and the memory is configured to store a computer program or instructions and/or data. The memory may be integrated with the processor, or may be disposed separately. Certainly, the communication apparatus may alternatively not include the memory, and the memory may be disposed outside the communication apparatus. For example, there may be one or more memories.

For example, the processor, the communication interface, and the memory are connected to each other through a bus. The bus may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in the figure, but this does not mean that there is only one bus or only one type of bus.

It may be understood that the processor mentioned in embodiments of this application may be a central processing unit (central processing unit, CPU), a network processor (network processor, NP), or a combination of a CPU and an NP. The processor may further include a hardware chip. The hardware chip may be an application-specific integrated circuit (application-specific integrated circuit, ASIC), or a programmable logic device (programmable logic device, PLD). The PLD may be a complex programmable logic device (complex programmable logic device, CPLD), a field-programmable gate array (field-programmable gate array, FPGA), generic array logic (generic array logic, GAL), or any combination thereof.

It may be further understood that the memory mentioned in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache.

It may be understood that, if embodiments of this application are implemented in a form of software and sold or used as an independent product, a corresponding program (which may also be referred to as code or instructions) may be stored in a readable storage medium. Therefore, this application further provides a readable storage medium, including a program. When the program is run on a device or a computer, the device or the computer is caused to perform any possible implementation of the foregoing solutions.

The readable storage medium includes any medium that can store program code, such as a USB flash drive, a removable hard disk, a ROM, a RAM, a magnetic disk, an optical disc, or the like.

The technical solutions of this application may be embodied in a form of a software product. Therefore, this application further provides a program product. The program product includes a program. When the program is run, a device or a computer is caused to perform any possible implementation of the foregoing solutions.

In addition, an embodiment of this application further provides a chip system (or a chip). The chip system includes a processor and an interface circuit. The interface circuit is configured to send and/or receive data, instructions, or information for the processor. The processor is configured to perform any possible implementation of the foregoing solutions.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
obtaining, by a terminal device, global navigation satellite system GNSS location information in a preset time period, wherein a moment at which the terminal device starts to obtain the GNSS location information is a first moment, and a moment at which the terminal device completes obtaining the GNSS location information is a second moment; and
evaluating, by the terminal device, a CHO trigger condition after the second moment; or
prohibiting the terminal device from evaluating a CHO trigger condition in the preset time period; or
evaluating, by the terminal device, a CHO trigger condition in the preset time period.

2. The method according to claim 1, wherein evaluating, by the terminal device, the CHO trigger condition in the preset time period comprises:
determining, based on remaining service duration, whether to evaluate the CHO trigger condition, wherein the remaining service duration is remaining duration in which a source network device is capable of providing a service for the terminal device.

3. The method according to claim 1 or 2, wherein the method further comprises:
after obtaining the GNSS location information, triggering, by the terminal device, a timing advance report TAR; or
prohibiting the terminal device from triggering a TAR between the first moment and the second moment; or
triggering, by the terminal device, a first TAR between the first moment and the second moment; and determining, by the terminal device based on a first variation, whether to cancel the first TAR, wherein the first variation is a variation of a first TA relative to a second TA, the first TA is obtained based on the GNSS location information, and the second TA is a TA most recently reported by the terminal device; or
prohibiting the terminal device from generating a timing advance report media access control control element MAC CE between the first moment and the second moment, wherein the timing advance report MAC CE is used to report a TA.

4. The method according to claim 3, wherein after obtaining the GNSS location information, triggering, by the terminal device, the TAR comprises:
determining, by the terminal device, the first variation after obtaining the GNSS location information; and
triggering, by the terminal device, the TAR when the first variation is greater than or equal to a preset threshold.

5. The method according to claim 3, wherein determining, by the terminal device based on the first variation, whether to cancel the first TAR comprises:
canceling, by the terminal device, the first TAR when the first variation is less than a preset threshold.

6. The method according to claim 3, wherein prohibiting the terminal device from generating the timing advance report MAC CE between the first moment and the second moment comprises:
between the first moment and the second moment, prohibiting the terminal device from using an uplink shared channel UL-SCH resource and triggering a scheduling request.

7. The method according to any one of claims 1 to 6, wherein the terminal device is an Internet of Things terminal.

8. The method according to any one of claims 1 to 7, wherein the method further comprises:
skipping, by the terminal device during GNSS measurement, performing at least one task of the following: radio link monitoring, cell selection, serving cell measurement, neighboring cell measurement, system information reading, or radio link reestablishment; and
performing, by the terminal device, the at least one task after completing the GNSS measurement.

9. The method according to claim 8, wherein the terminal device starts a first timer, and the terminal device performs the at least one task during running of the first timer; and the method further comprises:
when the terminal device starts the GNSS measurement before the first timer expires, suspending, by the terminal device, the first timer during the GNSS measurement.

10. The method according to claim 8 or 9, wherein the method further comprises:
resuming the first timer after the GNSS measurement is completed.

11. The method according to any one of claims 8 to 10, wherein the method further comprises:
suspending, by the terminal device, the first timer before the GNSS measurement starts.

12. The method according to claim 9 or 10, wherein the first timer is any one of T310, T311, or T301.

13. A communication apparatus, comprising a unit configured to perform the method according to any one of claims 1 to 12.

14. A communication apparatus, comprising a communication interface and a processor, wherein the processor is configured to execute a computer program or instructions, to cause the communication device to perform the method according to any one of claims 1 to 12.

15. A communication system, wherein the communication system comprises a terminal device and a network device; and
the terminal device is configured to perform the method according to any one of claims 1 to 12.

16. A computer-readable storage medium, comprising a computer program or instructions, wherein when the computer program or the instructions are run on a computer, the computer is caused to perform the method according to any one of claims 1 to 12.

17. A computer program product, comprising instructions, wherein when the instructions are run on a computer, the computer is caused to perform the method according to any one of claims 1 to 12.
